# NEUE EUROPÄISCHE PATENTSCHRIFT

(11) **EP 2 027 799 B2**
(45) Veröffentlichungstag und Bekanntmachung des Hinweises auf die Entscheidung über den Einspruch: **24.08.2016**
(45) Hinweis auf die Patenterteilung: 09.03.2011
(21) Anmeldenummer: 07114778.9
(22) Anmeldetag: 22.08.2007
(51) Int. Cl.: A47J 31/52

(54) **Vorrichtung zum Brühen eines flüssigen Lebens- oder Genussmittels**
Device for brewing liquid food or liquid luxury food
Dispositif pour préparer une denrée liquide alimentaire ou de luxe

(43) Veröffentlichungstag der Anmeldung: 25.02.2009
(73) Patentinhaber: Delica AG, 4127 Birsfelden (CH)
(72) Erfinder: Luzzi, Andreas, 8716 Schmerikon (CH); Brändle, Erwin, 8717 Benken (CH); Prechtl, Heiner, 8640 Rapperswil (CH); Pfister, Marco, 8733 Eschenbach (CH); Foscan, Claudio, 8640 Rapperswil (CH); Deuber, Louis, 8805 Richterswil (CH)
(74) Vertreter: Hepp Wenger Ryffel AG

(56) Entgegenhaltungen:
- EP-A1- 1 854 386
- WO-A-97/24052
- WO-A1-01/54260
- DE-A1-102004 046 452
- US-A- 6 000 317

## Beschreibung

Die Erfindung betrifft eine Vorrichtung zum Brühen eines flüssigen Lebens- oder Genussmittels gemäss dem Oberbegriff von Anspruch 1. Dabei kann es sich beispielsweise um eine Kaffeemaschine oder aber auch um eine Maschine zum Brühen alternativer Getränke wie z.B. Tee, Kakao oder Suppe handeln.

Derartige Vorrichtungen werden heute in vielen privaten Haushaltungen, aber auch in Büros, Aufenthaltsräumen usw. eingesetzt, wo sie nicht dauernd, sondern nur in bestimmten Zeitintervallen betätigt werden. In der Zwischenzeit arbeiten die Vorrichtungen in einem Bereitschaftsmodus, der jedoch einen erheblichen Anteil elektrische Energie benötigt. Insbesondere bei Kaffeemaschinen ist der Stromverbrauch im Bereitschaftsmodus hoch, weil permanent eine bestimmte verhältnismässig hohe Wassertemperatur gehalten werden muss.

US 6,000,317 beschreibt eine Vorrichtung zum Brühen eines flüssigen Lebens- oder Genussmittels mit einer Brühkammer zur Aufnahme einer einen zu brühenden Stoff, mit einer elektrischen Pumpe zur Durchleitung einer Flüssigkeit durch die Brühkammer,
mit einem elektrischen Durchlauferhitzer zum Aufheizen der Flüssigkeit, und mit einem Hauptschalter, sowie mit weiteren elektrischen Verbrauchern, Sensoren und Bedienungselementen, wobei die Vorrichtung ein elektronisches Schaltmodul aufweist und wobei sie nach Ablauf einer vorbestimmbaren Zeit seit dem Ende eines Brühvorgangs bzw. seit der letzten Betätigung eines Bedienungselements mit dem elektronischen Schaltmodul in einen Standby-Modus umschaltbar ist, in dem bei eingeschaltetem Hauptschalter wenigstens der Durchlauferhitzer und vorzugsweise die Pumpe abgeschaltet sind und keine Energie verbrauchen.

Die EP 1 854 386 betrifft einen Stand der Technik, der unter Artikel 54(3) fällt. Demnach umfasst eine Getränkebereitungsmaschine eine Steuereinheit, mindestens eine Funktionseinheit zur Durchführung eines Prozesses für die Getränkebereitung und einen Stromkreis zur Versorgung der Funktionseinheit und der Steuereinheit mit Strom. Der Stromkreis umfasst einen Schalter mit einem Betätigungselement, wobei der Schalter zwei Schaltkontakte umfasst, die im Stromkreis parallel geschaltet sind. Beim Abschalten des Stroms über das Betätigungselements wird die Funktionseinheit zunächst noch mit Strom versorgt bis ein vorbestimmter Betriebszustand erreicht ist. Erst dann sorgt die Steuereinheit dafür, dass die Maschine ganz von der Netzspannung getrennt wird. Dadurch wird verhindert, dass die Stromversorgung zu einem unerwünschten Zeitpunkt unterbrochen werden kann.

Durch die WO 97/24052 ist beispielsweise eine Kaffeemaschine bekannt geworden, die entsprechend der erfindungsgemäss gestellter Aufgabe keine Vorheizzeit benötigen soll und im Bereitschaftszustand keine Energie verbrauchen soll. Dazu wird ein Durchlauferhitzer mit kleiner Wärmekapazität anstelle eines massiven Elektroheizblocks verwendet. Um die erwünschte Wasserausgangstemperatur zu erhalten, wird ein Regelkreis eingesetzt. Der Durchlauferhitzer besteht dabei aus einem aus mehreren Schichten bestehenden Rohr, das einen gewickelten Heizdraht enthält. Mit diesem Durchlauferhitzer sollen rasch hohe Temperaturen erzielt werden. Ausserdem ist ein Regelkreis vorgesehen, dessen Regelgrösse die Wassertemperatur am Ende des Durchlauferhitzers ist.

Mit diesen Massnahmen lässt sich der Energieverbrauch jedoch noch nicht auf zufrieden stellende Art und Weise reduzieren. Insbesondere erfolgt noch keine vollständige Trennung aller Hauptstromverbraucher vom Netz. Es ist daher eine Aufgabe der Erfindung, eine Vorrichtung der eingangs genannten Art zu schaffen, die beim grösstmöglichem Bereitschaftsgrad die kleinstmögliche Energiezufuhr benötigt und bei der insbesondere alle Hauptstromverbraucher in der Ruhephase vollständig vom Netz getrennt sind. Die Vorrichtung soll dabei trotzdem einen hohen Grad von Bedienungskomfort und Betriebssicherheit aufweisen. Ausserdem soll die Vorrichtung einfach in der Herstellung und Wartung sein. Diese Aufgabe wird erfindungsgemäss mit einer Vorrichtung gelöst, welche die Merkmale in Anspruch 1 aufweist.

Durch den Einsatz des elektronischen Schaltmoduls wird nicht nur der Energieverbrauch im Bereitschaftsmodus reduziert, sondern es kann abgesehen von einem minimalen Steuerstrom ein annähernd energieloser Standby-Modus erzielt werden. Dies betrifft insbesondere den Durchlauferhitzer, der auf diese Weise nicht nur geregelt, sondern vollständig abgeschaltet bzw. vom Netz getrennt wird. Auf die gleiche Weise kann vorzugsweise auch die Pumpe geschaltet sein, so dass ein Betätigen der Pumpe innerhalb des Standby-Modus nicht möglich ist.

Besonders vorteilhaft werden neben dem Durchlauferhitzer weitere elektrische Verbraucher wie z.B. Sensoren, Leuchtmittel und dergleichen in den Standby-Modus einbezogen, wobei sie durch diesen im Energieverbrauch reduzierbar oder abschaltbar das heisst vom Netz vollständig trennbar sind. Insbesondere Temperatursensoren, Durchflusssensoren, Leuchtdioden an Schaltern, Digitalanzeigen und vieles mehr verbrauchen auch dann elektrische Energie, wenn die Vorrichtung nicht benötigt wird. Durch den Einbezug dieser Verbraucher in den Standby-Modus kann der Energieverbrauch weiter reduziert werden.

Ein besonders hoher Bedienungskomfort wird erreicht, wenn die Vorrichtung mehrere Leuchtmittel, insbesondere zum Anzeigen eines Zustandes aufweist, welche durch das Schaltmodul mit Ausnahme eines einzigen Leuchtmittels abschaltbar sind, das der Anzeige des Standby-Modus dient. Auf diese Weise ist erkennbar, dass die Vorrichtung überhaupt aktiviert ist, wobei jedoch in Abhängigkeit vom letztmaligen Gebrauch eine kürzere oder längere Zeitspanne in Kauf genommen werden muss, bis wiederum ein Bereitschaftszustand erstellt ist.

Der Standby-Modus ist dabei vorteilhaft durch Betätigen eines Bedienungselements der Vorrichtung beendbar, wobei entweder ein Bereitschaftsmodus ansteuerbar ist, in dem der Durchlauferhitzer aufgeheizt wird oder aber unmittelbar ein Brühvorgang neu startbar ist. Letzteres trifft dann zu, wenn die Temperatur am Durchlauferhitzer noch derart hoch ist, dass er keine Aufheizzeit benötigt. Der Standby-Modus kann beispielsweise durch Betätigen einer Starttaste unterbrochen werden. Die Vorrichtung beginnt, sofern Betriebsbereitschaft vorhanden, dann sofort einen Brühvorgang oder sie zeigt durch entsprechende Leuchtmittel an, dass die Betriebsbereitschaft noch nicht erstellt ist.

Die Leistungsaufnahme im Standby-Modus wird vorteilhaft auf höchstens 0,5 Watt, vorzugsweise auf höchstens 0,3 Watt reduziert. Ein derartig tiefer Standby-Energieverbrauch fällt ersichtlicherweise auch über eine längere Zeitspanne nicht ins Gewicht.

Es hat sich überraschend gezeigt, dass optimale Betriebswerte erzielt werden können, wenn der Durchlauferhitzer mit einer Wärme dämmenden Aussenisolation versehen ist, deren Wärmedurchgangskoeffizient höchstens 2 W/m²K, vorzugsweise höchstens 1 bis 1,5 W/m²K beträgt. Mit derart optimalen Wärmedämmwerten wird erreicht, dass auch nach einer längeren Ruhephase die Betriebsbereitschaft aufrecht erhalten bleibt, bzw. innerhalb von Sekunden wiederum erreicht wird. Der Durchlauferhitzer kann dabei so ausgelegt sein, dass mit ihm Temperaturen von wenigstens 95°C verhältnismässig rasch erreichbar sind, beispielsweise mit einer Heizleistung von 1000 Watt auch bei Kaltstart innerhalb von nur etwa einer Minute. Die Wärme dämmende Aussenisolation kann dabei derart gewählt sein, dass z.B. die Abkühlung aus dem Betriebsbereitschaftszustand im Standby-Modus nach 2 Stunden nicht mehr als 40°C, vorzugsweise nicht mehr als 50°C beträgt. Bei einer derart flachen Abkühlungskurve müssen nur sehr geringe oder gar keine Wartezeiten nach dem Unterbrechen des Standby-Modus in Kauf genommen werden.

Die Aussenisolation besteht vorteilhaft aus einem hitzebeständigen, formstabilen und leicht formbaren Kunststoffmaterial. Als besonders geeignet hat sich dabei ein Copolymer aus Propen und Olefinen (Expanded Polypropylen - EPP) erwiesen. Dieses Material ist beispielsweise auch unter der Marke Neopolen® bekannt. Es wird beispielsweise im Fahrzeugbau und in der Verpackungsindustrie auch für mechanisch stark beanspruchte Teile eingesetzt.

Der Durchlauferhitzer kann unterschiedliche Bauweisen aufweisen. Als besonders vorteilhaft hat sich eine quaderartige Bauform herausgestellt, wobei der Durchlauferhitzer einen mäanderartigen Durchlasskanal aufweisen kann. Die Quaderform ist relative kompakt und erleichtert ein möglichst vollständiges Einbetten in eine Aussenisolation. Die Aussenisolation ist vorteilhaft so ausgebildet, dass sie den Durchlauferhitzer weitgehend passgenau umschliesst. Dabei ist es denkbar, dass die Aussenisolation durch zwei ineinander greifende, vorzugsweise passgenaue Halbschalen gebildet wird, welche mit oder ohne zusätzliche Spannmittel zusammen halten. Da der Durchlauferhitzer zu Wartungszwecken zugänglich sein muss, können die beiden passgenauen Halbschalen auf einfache Art geöffnet und wieder sicher geschlossen werden. Als geeignete Spannmittel kommen beispielsweise Schrauben, Federklemmen, Umreifungsbänder oder dergleichen in Betracht. Alternativ wäre es aber selbstverständlich auch denkbar, dass die Aussenisolation ganz oder teilweise fest mit dem Durchlauferhitzer verbunden ist.

Das Schaltmodul kann mittels eines Timers derart programmiert sein, dass der Standby-Modus frei wählbar eintritt, wobei z.B. nach 30 Sekunden bis 120 Sekunden, vorzugsweise nach ca. 60 Sekunden seit der Beendigung eines Brühvorgangs bzw. seit der letzten Betätigung eines Bedienungselements der Standby-Modus einschaltbar ist. Die optimale Isolation am Durchlauferhitzer ermöglicht derart extrem kurze Abschaltzeiten. Je nach dem, wie intensiv eine Vorrichtung gebraucht wird, könnten diese Abschaltzeiten gegebenenfalls auch verlängert oder verkürzt werden.

Gemäss Erfindung ist die Brühkammer zur Aufnahme einer Kapsel bestimmt, wobei die Kapsel bei geschlossener Brühkammer penetrierbar ist und wobei ein Öffnungselement zum Öffnen und Schliessen der Brühkammer bzw. zum Auswerfen der Kapsel angeordnet ist, wobei das Betätigen des Öffnungselements den Standby-Modus unterbricht. Bereits das Öffnen oder Schliessen der Brühkammer unterbricht somit den Standby-Modus, sodass die Vorrichtung beispielsweise auch bei völlig leerer Brühkammer für einen Spülvorgang mit Wasser umgehend bereit wäre.

Besonders vorteilhaft weist die Vorrichtung eine programmierbare Steuerschaltung auf, mit der betriebsrelevante Parameter programmierbar sind, bzw. mit der betriebsrelevante Parameter für Diagnostikzwecke speicherbar sind. Diese Steuerschaltung enthält beispielsweise auch den Timer, der den Standby-Modus auslöst. Mit Hilfe dieser Steuerschaltung können aber auch diverse weitere Parameter angesteuert werden, wobei auch ein Diagnostikprogramm gespeichert werden kann, das die Abfrage bestimmter Ist-Parameter ermöglicht.

Das Design der Brühvorrichtung basiert auf den Gesichtspunkten der Gesamtoptimierung betreffend Einsatz, Betrieb, Wartung und Reparatur. Höchst mögliche Flexibilität wird dadurch gewährleistet, dass sämtliche allfälligen betriebsrelevanten Anpassungen für beispielsweise den Einsatz von verschiedenen Brühgütern oder die Prozessoptimierung ausschliesslich durch Softwareanpassungen erfolgen kann. Servicearbeiten an der Vorrichtung werden durch eine komplette Diagnostik über die Steuerschaltung erleichtert. Als Steuerschaltung lässt sich beispielsweise besonders vorteilhaft ein Mikroprozessor vom Typ ATmega8™ der Firma Atmel Corporation, 2325 Orchard Parkway, San Jose, CA 95131, USA, verwenden. Dieser multifunktionale Mikroprozessor (RISC Prozessor) kann durch folgende Eigenschaften umschrieben werden:
- 8bit RISC Architektur,
- Integrierter nicht flüchtiger Speicher für den Programm Code (FLASH),
- Integrierter nicht flüchtiger Speicher für Parameter (IIPROM),
- Verschiedene Schnittstellen (SPI/I2C/USART/GPIO),
- Timer,
- Analog-Digitalwandler,
- Sicherheitsfunktionen (watch dog, brown-out detector),
- Integrierte Taktgenerierung (wenige externe Bauteile nötig).

Der Mikroprozessor arbeitet auch als Digitaltool. So können beispielsweise die Anzahl Kaffees (inklusive Art von Kaffee oder alternativ Tee), die operative Soft- und Hardwareversionen (Grundeinstellungen), sowie etwelche Fehlermeldungen ausgelesen werden. Dies geschieht über die Debug- bzw. Konfigurationsschnittstelle mittels speziellem Verbindungskabel und Standard PC.

Eine optimale Anordnung des Durchlauferhitzers im Gehäuse der Vorrichtung kann dadurch erzielt werden, dass der Durchlauferhitzer zur Vermeidung von Wärmebrücken an der Aussenisolation innerhalb der Vorrichtung aufliegt und/oder befestigt ist. Auf diese Weise führen nur gerade schlecht leitende Kunststoffschläuche zum Durchlauferhitzer bzw. von diesem weg, ohne dass beispielsweise metallische Verbindungselemente wie z.B. Schrauben, Stifte, Bügel oder dergleichen leitend mit dem Körper des Durchlauferhitzers verbunden sind.

Weitere Vorteile und Einzelmerkmale der Erfindung ergeben sich aus dem nachstehend beschriebenen Ausführungsbeispiel und aus den Zeichnungen. Es zeigen:
- Figur 1: eine schematische Darstellung einer Kaffeemaschine mit den Merkmalen der Erfindung,
- Figur 2: die perspektivische Darstellung eines Basiselements für einen Durchlauferhitzer,
- Figur 3: ein Längsschnitt durch einen Durchlauferhitzer mit dem Basiselement gemäss Figur 2,
- Figur 4: eine perspektivische Darstellung des Durchlauferhitzers gemäss Figur 3 mit Anschlusselementen und Montageplatte,
- Figur 5: eine perspektivische Darstellung einer Aussenisolation bestehend aus zwei Halbschalen für den Durchlauferhitzer gemäss Figur 4,
- Figur 6: ein Längsschnitt durch den Durchlauferhitzer gemäss Figur 4 mit Aussenisolation,
- Figur 7: ein Diagramm mit der Abkühlung an einem Durchlauferhitzer in Abhängigkeit der Zeit,
- Figur 8: ein Diagramm mit der Temperatur am Durchlauferhitzer und mit dessen Leistungsaufnahme in Abhängigkeit von der Zeit in verschiedenen Betriebsstadien, und
- Figur 9: eine schematische Darstellung der möglichen Betriebszustände der Vorrichtung.

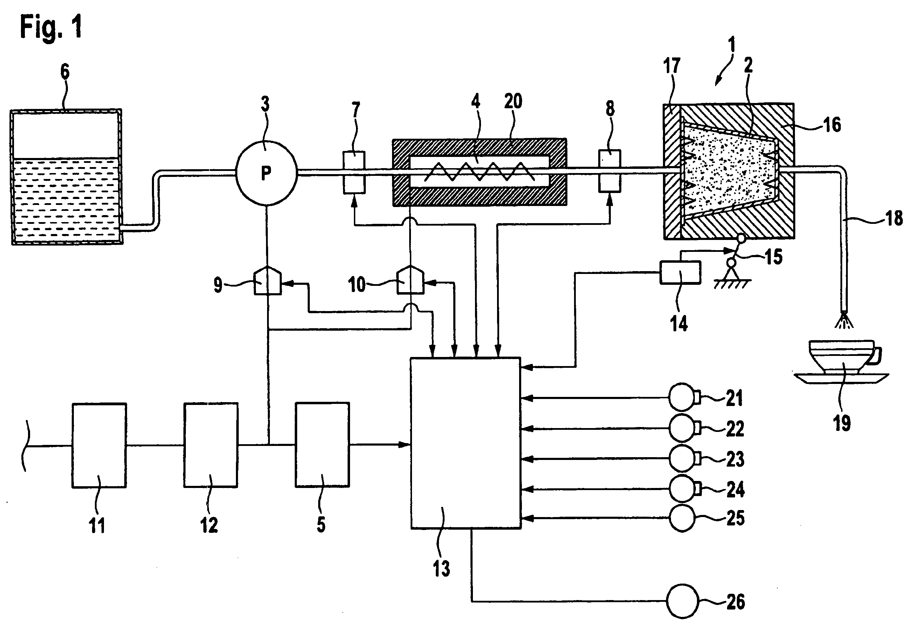

Die in Figur 1 vereinfacht dargestellte Kaffeemaschine verfügt über eine Brühkammer 1, welche eine Kapsel 2 mit pulverförmigem Kaffee aufnehmen kann. Die Brühkammer besteht dabei aus einer Kapselaufnahme 16 und aus einem Injektorkopf 17, der dichtend gegen die Kapselaufnahme pressbar ist. Bei vollständig geschlossener Brühkammer ist die Kapsel 2 penetrierbar, sodass über den Injektorkopf 17 heisses Wasser durch die Kapsel durchleitbar ist. Der Kaffee verlässt die Brühkammer über einen Auslauf 18, unter den eine Kaffeetasse 19 positionierbar ist. Das Funktionsprinzip einer derartigen Brühkammer ist beispielsweise in der EP 1 721 553 beschrieben.

Das Brühwasser stammt aus einem Wassertank 6, aus dem es mit Hilfe einer Pumpe 3 einem Durchlauferhitzer 4 zuführbar ist. Bei der Pumpe kann es sich beispielsweise um eine für Kaffeemaschinen typische elektrische Vibrationspumpe mit einer Leistungsaufnahme von z.B. 50 Watt und einem max. Arbeitsdruck von 20 bar handeln. Derartige Pumpen werden beispielsweise von der Firma Ulka S.p.A., Corso Cavour, 9, 27100 Pavia, Italien, unter der Bezeichnung E4 angeboten. Der Einsatz alternativer Pumpentypen wie z.B. Membranpumpen usw. ist selbstverständlich denkbar.

Die Menge des mit der Pumpe geförderten Wassers wird über einen Strömungssensor 7 ermittelt. Auf diese Weise ist es möglich, den Pumpenbetrieb derart zu steuern, dass je nach gewünschter Kaffeeart unterschiedliche Mengen gefördert werden.

In dem mit einer Aussenisolation 20 versehenen Durchlauferhitzer 4 wird die Wassertemperatur bis auf einen Wert zwischen beispielsweise 95°C und 105°C erhöht. Die Temperatur des aus dem Durchlauferhitzer 4 abströmenden Wassers wird mit Hilfe eines Temperatursensors 8 ermittelt. Strömungssensor 7 und Temperatursensor 8 stehen beide in Wirkverbindung mit einer Steuerschaltung 13, welche in Abhängigkeit vom Betriebszustand der Vorrichtung verschiedene Steuerungsaufgaben erfüllt.

Die Brühkammer 1 ist mit einem Öffnungselement 15, beispielsweise mit einer Hebelmechanik versehen. Ein Auswurfschalter 14 wird durch das Öffnungselement 15 betätigt und steht seinerseits mit der Steuerschaltung 13 in Wirkverbindung. Der Auswurfschalter bewirkt ausserdem, dass bei geöffneter Brühkammer 1 die Pumpe 3 nicht betätigt werden kann.

Die Kaffeemaschine verfügt über weitere Anzeige- und Bedienungselemente. Mit den beleuchteten Schaltern 21, 22 und 23 kann ein Brühvorgang gestartet werden, wobei jeder einzelne Schalter beispielsweise einer bestimmten Flüssigkeitsmenge entspricht. Mit dem beleuchteten Schalter 24 kann beispielsweise ein Spülvorgang ausgelöst werden, bei dem eine etwas grössere Wassermenge durch die geschlossene jedoch leere Brühkammer gleitet wird. Selbstverständlich könnten die Schalter 21 bis 24 auch durch andere Schaltelemente wie z.B. durch einen Wahlschalter ersetzt werden. Eine schalterlose Leuchtdiode 25 kann beispielsweise weitere Anzeige- und/oder Beleuchtungszwecke erfüllen. Schliesslich verfügt die Vorrichtung auch noch über eine weitere Leuchtdiode 26, beispielsweise eine pulsierend arbeitende Leuchtdiode, welche den Standby-Modus anzeigt.

Die Kaffeemaschine wird über einen Hauptschalter 11 vom Netz mit elektrischer Energie versorgt. Ein elektrostatischer Entladungsschutz 12 (ESD Protections) sorgt dafür, dass sich keine Bauteile aufladen können bzw. dass keine elektronischen Schaltungen gestört werden.

Ein wesentliches Element der Vorrichtung ist das elektronische Schaltmodul 5, das die Steuerschaltung 13 mit Betriebsspannung im Gleichstrom versorgt und das den Standby-Modus auslöst bzw. beendet. Es handelt sich dabei beispielsweise um ein Standby Supply Module vom Typ BPS1 Series der Firma Bias Power LLC, Buffalo Grove, USA. Ein derartiges Modul verfügt bei einer Ausgangsleistung von maximal 1 Watt im Standby-Betrieb über eine ausserordentlich geringe Leistungsaufnahme von weniger als 30 mW. Die Funktionsweise eines derartigen Moduls ist beispielsweise in der WO 01/54260 beschrieben.

Die Stromversorgung der Pumpe 3 und des Durchlauferhitzers 4 mit beispielsweise 230 Volt Wechselstrom erfolgt über die isolierten Schalter 9 und 10. Diese stehen ebenfalls mit der Steuerschaltung 13 in Wirkverbindung bzw. sind über diese ansteuerbar.

Nach einer vorbestimmbaren Zeit von beispielsweise 60 Sekunden nach der Beendigung eines Brühvorgangs schaltet das Schaltmodul die Vorrichtung in den Standby-Modus. In diesem Modus werden nicht nur die Schalter 9 und 10 unterbrochen, sondern auch die Sensoren 7 und 8 sowie die Leuchtdioden/Schalter 21 bis 25 werden von der Betriebsspannung abgekoppelt und sind damit nicht mehr in Aktion. Einzig die Standby-Anzeige 26 wird mit Strom versorgt und signalisiert, dass der Hauptschalter 11 eingeschaltet ist und dass sich die Maschine lediglich im Standby-Modus befindet.

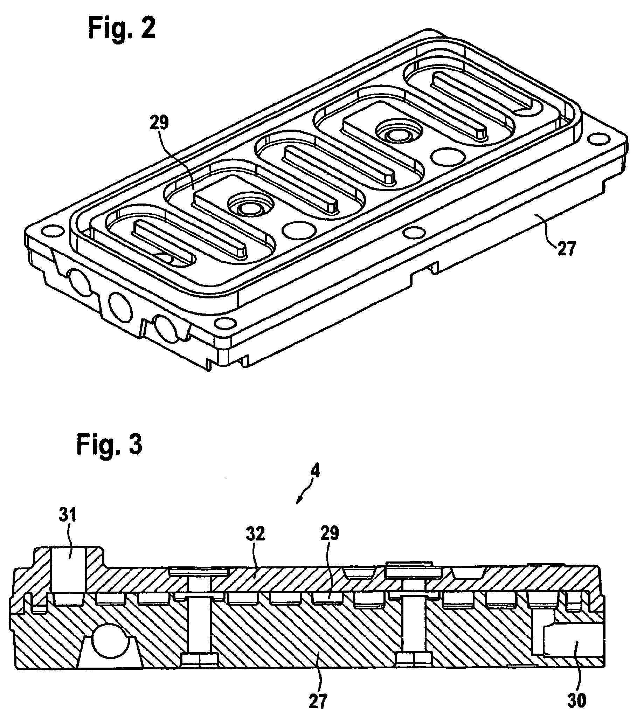

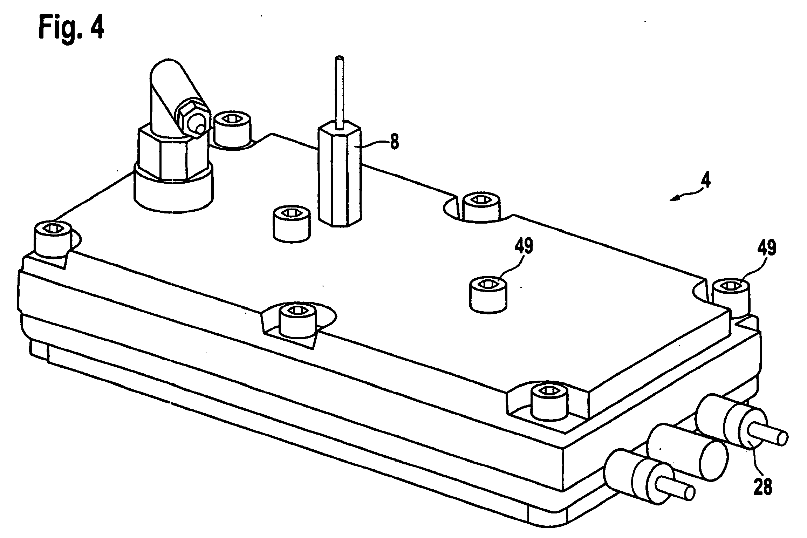

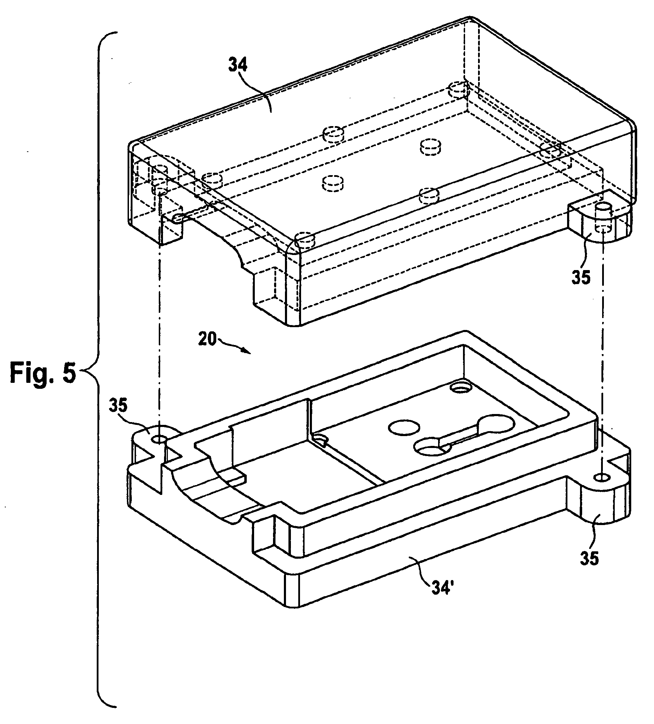

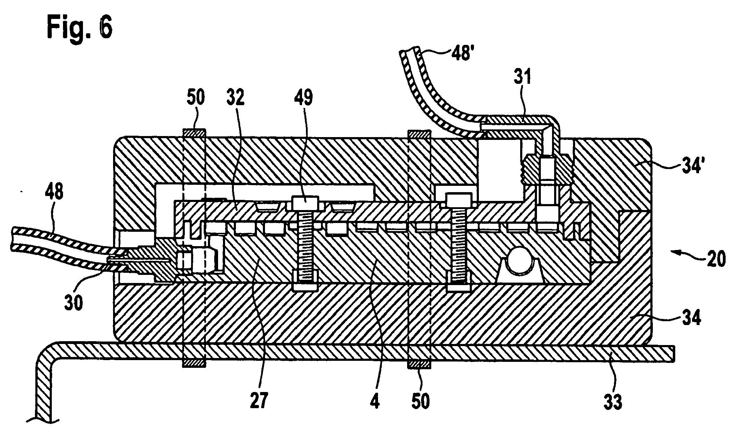

Weitere Einzelheiten zum Durchlauferhitzer sind aus den Figuren 2 bis 4 und zu dessen Aussenisolation aus den Figuren 5 und 6 ersichtlich. Der Durchlauferhitzer besteht im Wesentlichen aus einem quaderartigen Basiselement 27, beispielsweise aus einem gut Wärme leitenden Metall wie Aluminium, Kupfer oder Stahl, in dem ein U-förmiger Heizkörper 28 für eine elektrische Widerstandsheizung eingebaut ist. Auf einer Oberfläche des Basiselements 27 ist ein mäanderförmiger Kanal 29 angeordnet. Durch diese Kanalführung wird eine optimal lange Heizstrecke erzielt, welche die Flüssigkeit zu deren Erwärmung zurücklegen muss. Die Oberseite des Basiselements 27 und damit auch der Kanal 29 ist mit einer Abdeckung 32 dichtend verschlossen. Basiselement und Abdeckung werden durch Schrauben 49 zusammengehalten, welche die gesamte Einheit zwischen dem Mäanderkanal durchdringen. Das Wasser tritt bei Raumtemperatur an einem Eingang 30 in den Durchlauferhitzer ein und verlässt diesen mit einer Arbeitstemperatur zwischen z.B. 90°C bis 105°C an einem Ausgang 31. Wie aus Figur 4 ersichtlich ist, kann der Temperatursensor 8 unmittelbar am Durchlauferhitzer befestigt bzw. in diesen eingebaut sein.

Gemäss Figur 5 besteht die Aussenisolation 20 aus den beiden Halbschalen 34 und 34', die mit ineinander greifenden Wandabschnitten passgenau zusammenfügbar sind. Die Innenkontur dieser Halbschalen ist weitgehend passgenau der Aussenkontur des Durchlauferhitzers 4 angepasst. Dieser kann damit praktisch spielfrei in die Aussenisolation eingebettet werden. Die Verbindung der beiden Halbschalen 34 und 34' erfolgt vorzugsweise ausschliesslich durch die Passgenauigkeit, wobei auch Rastnocken, ineinander greifende Verzahnungen, Keilflächen mit selbsthemmendem Anzug usw. denkbar sind. Alternativ oder zusätzlich kann die Verbindung auch mit geeigneten Verbindungsmitteln oder Spannmitteln erfolgen, die z.B. an den Verbindungslaschen 35 angesetzt werden könnten. Alternativ können die beiden Halbschalen auch mit einer Umreifung, beispielsweise mit einem Spannband, zusammen gehalten werden. Beim vorliegenden Ausführungsbeispiel haben die beiden Halbschalen beispielsweise eine Wandstärke von ca. 15 bis 22mm. Das Material ist der eingangs erwähnte Polypropylen-Schaumstoff Neopolen® der Firma BASF.

Figur 6 zeigt den vollständig in die Aussenisolation 20 eingebetteten Durchlauferhitzer 4, der lediglich über Kunststoffschläuche 48 und 48' unmittelbar Kontakt mit der übrigen Vorrichtung hat. Dagegen erfolgt die Befestigung innerhalb des Maschinengehäuses beispielsweise an einer Montageplatte 33 ausschliesslich an der Aussenisolation, ohne direkte Wärmebrücke zum Durchlauferhitzer. Beispielsweise könnte die Aussenisolation mit Kabelbindern 50 aus Kunststoffmaterial an der Montageplatte 33 fixiert sein. Diese werden bei Wartungsarbeiten einfach aufgeschnitten und anschliessend neu gesetzt.

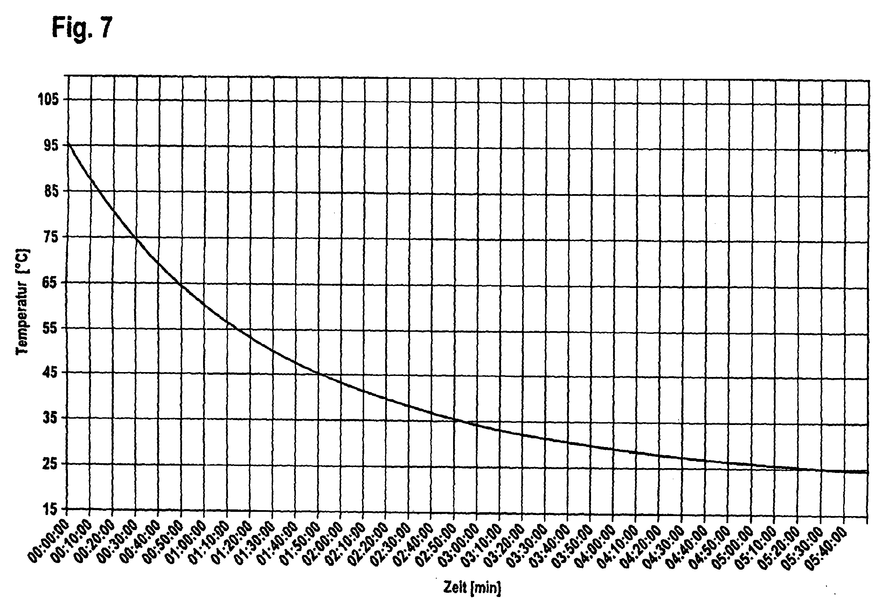

In Figur 7 ist dargestellt, wie sich die Aussenisolation mit den angestrebten Wärmedämmwerten auf die Abkühlung der Wassertemperatur am Durchlauferhitzer auswirkt. Unmittelbar bei Beginn des Standby-Modus und am Ende eines Bereitschaftszyklus liegt die Wassertemperatur beispielsweise bei 95°C. Nach 30 Minuten beträgt die Temperatur immer noch 75°C und nach einer Stunde beträgt sie immer noch ca. 60°C. Selbst nach rund 2 Stunden kann noch mit einer Temperatur von annähernd 45°C gerechnet werden, womit die Betriebsbereitschaft nach dem Abbrechen des Standby-Modus innerhalb von Sekunden wieder erstellt werden kann. Dies umso mehr, als dass der Durchlauferhitzer eine relativ hohe Leistungsaufnahme von etwa 1000 Watt aufweist.

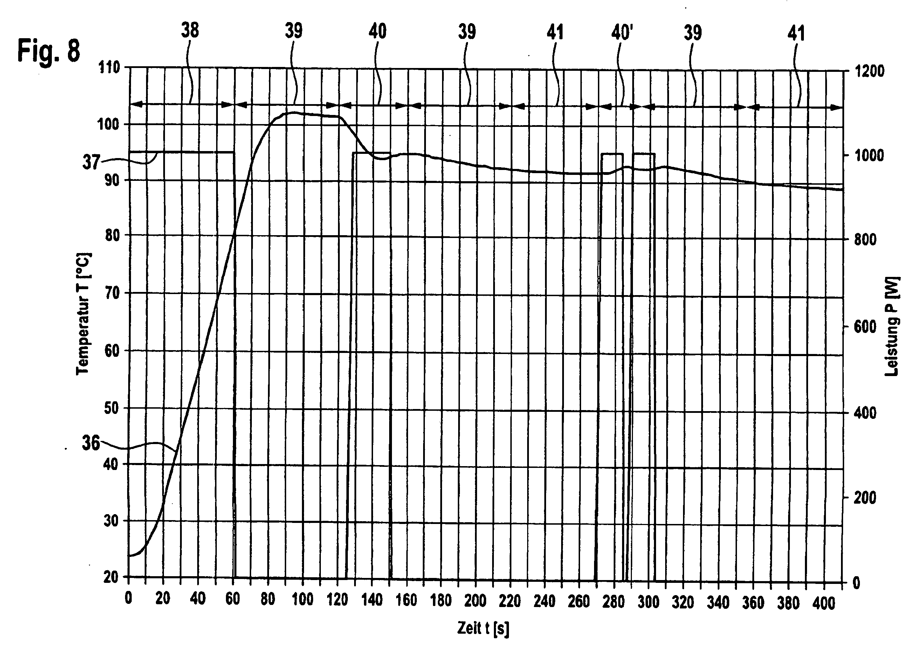

In Figur 8 sind in Abhängigkeit von der Zeit verschiedene Betriebszustände der Kaffeemaschine dargestellt, wobei die Temperaturkurve 36 auf der linken Seite die Temperatur in Grad Celsius anzeigt. Die Leistungskurve 37 zeigt auf der rechten Seite die Leistungsaufnahme in Watt an. Nach dem Einschalten der Kaffeemaschine beginnt eine Aufwärmphase 38, während der der Durchlauferhitzer mit voller Leistung von 1000 Watt aufgeheizt wird. Nach rund 60 Sekunden fällt die Maschine in einen Bereitschaftsmodus 39, bei dem keine Heizenergie mehr zugeführt wird, die Temperatur jedoch nach wie vor leicht steigt bis auf einen Wert von ca. 105°C. Nach etwas mehr als 120 Sekunden beginnt beispielsweise ein erster Brühvorgang 40 für normalen Kaffee, während dem der Durchlauferhitzer wiederum volle Leistung erhält. Nach dem Abschluss des Brühvorgangs fällt die Maschine wiederum in einen Bereitschaftsmodus 39, der jedoch nach 60 Sekunden vom Standby-Modus 41 abgelöst wird. In diesem Standby-Modus werden auch nicht benötigte Leuchtdioden, Sensoren usw. vom Versorgungsstrom abgekoppelt. Beim Betätigen eines Bedienungselements der Kaffeemaschine können beispielsweise rasch hintereinander wiederum zwei Brühvorgänge 40' für Espresso getätigt werden, die im vorliegenden Beispiel auf der Zeitachse zwischen 270 Sekunden und ca. 300 Sekunden eingetragen sind. In Folge der nach wie vor hohen Wassertemperatur am Durchlauferhitzer von über 90°C müssen keine Wartezeiten in Kauf genommen werden. Unmittelbar nach Abschluss des letzten Brühvorgangs fällt die Maschine wiederum in den Bereitschaftsmodus 39, der jedoch nach 60 Sekunden wieder vom Standby-Modus 41 abgelöst wird. Um den 60 Sekunden Bereitschaftsmodus aufrecht zu erhalten, überspannt der zweite Heizeinsatz beim Espressobrühvorgang 40' das Ende des Espressobrühens. Wie aus der Temperaturkurve 36 ersichtlich ist, führt dieses Nachheizen auch wiederum zu einem leichten Temperaturanstieg.

Wird nun die Maschine längere Zeit nicht benutzt, nimmt die Temperaturkurve 36 etwa den in Figur 7 dargestellten Verlauf, wobei bei der nächsten Interaktion mit der Maschine möglicherweise eine Wartezeit von max. etwa 60 Sekunden bis zum Erstellen der Bereitschaft in Kauf genommen werden muss.

Die gesamte Leistungsaufnahme der Maschine bei Volllast beträgt ca. 1,05 kW, nämlich ca. 1 kW für den Durchlauferhitzer und ca. 50 W für die Pumpe. Dazu kommen noch rund 0,6 W für die Elektronik im Betrieb bzw. für die restlichen Verbraucher. Im Standby-Modus beträgt die Leistungsaufnahme jedoch lediglich 0,3 W oder weniger.

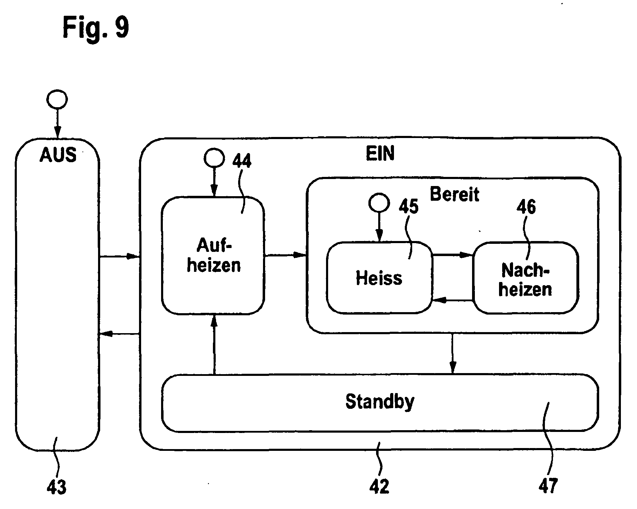

In Figur 9 sind noch die verschiedenen mögliche Betriebszustände dargestellt. Die Maschine befindet sich immer in einem der dargestellten Betriebszustände, nämlich Maschine ein 42 oder Maschine aus 43. Innerhalb des eingeschalteten Betriebszustands wird differenziert zwischen Aufheizen 44, Heiss 45 oder Nachheizen 46. Dazu kommt insgesamt der Standby-Modus 47. Beim Ausschalten über den Hauptschalter (Figur 1) wird die Funktion der Maschine deaktiviert und der Energieverbrauch reduziert sich auf 0. Dagegen wird beim Einschalten des Hauptschalters die Funktion der Maschine aktiviert und das Aufheizen 44 des Durchlauferhitzers beginnt. Beim Erreichen der Soll-Temperatur wird allgemein auf den Bereitschaftsmodus umgeschaltet. Solange die Ist-Temperatur innerhalb der Toleranzgrenze liegt, bleibt die Maschine im Bereitschaftsmodus Heiss 45. Erst wenn die Temperatur am Durchlauferhitzer unterhalb der Toleranzgrenze absinkt wird der Nachheizmodus angesteuert. Der Übergang vom Bereitschaftsmodus 45/46 in den Standby-Modus 47 wird über einen Timer gesteuert, wenn der Benutzer keine Interaktion mit der Maschine eingeht. Alle Sensoren, Aktoren und Signalisierungen sind deaktiviert, mit Ausnahme einer z.B. pulsierend aktiven Signalleuchte für den Standby-Betrieb. Mit der nächsten Interaktion des Benutzers wird der Standby-Modus verlassen. Dabei kann der Benutzer wahlweise eine Getränkeausgabetaste, die Spültaste oder den Kapselauswurf betätigen. Denkbar wären selbstverständlich auch andere Sensoren, mit deren Hilfe der Standby-Modus unterbrochen werden kann wie z.B. Stimmerkennungssensoren, Bewegungsmelder, Farberkennungssensoren usw.

## Patentansprüche

1. Vorrichtung zum Brühen eines flüssigen Lebens- oder Genussmittels
- mit einer Brühkammer (1) zur Aufnahme einer einen zu brühenden Stoff enthaltenden Portionsverpackung (2),
- mit einer elektrischen Pumpe (3) zur Durchleitung einer Flüssigkeit durch die Brühkammer,
- mit einem elektrischen Durchlauferhitzer (4) zum Aufheizen der Flüssigkeit,
- und mit einem Hauptschalter (11),
- sowie mit weiteren elektrischen Verbrauchern, Sensoren und Bedienungselementen,
wobei die Vorrichtung ein elektronisches Schaltmodul (5) aufweist und wobei sie nach Ablauf einer vorbestimmbaren Zeit seit dem Ende eines Brühvorgangs bzw. seit der letzten Betätigung eines Bedienungselements mit dem elektronischen Schaltmodul (5) in einen Standby-Modus umschaltbar ist, in dem bei eingeschaltetem Hauptschalter (11) wenigstens der Durchlauferhitzer und vorzugsweise die Pumpe abgeschaltet sind und keine elektrische Energie verbrauchen, wobei die Brühkammer (1) zur Aufnahme einer Kapsel (2) bestimmt ist, wobei die Kapsel bei geschlossener Brühkammer penetrierbar ist und wobei ein Öffnungselement (15) zum Öffnen und Schliessen der Brühkammer bzw. zum Auswerfen der Kapsel angeordnet ist, wobei das Betätigen des Öffnungselements den Standby-Modus unterbricht.

2. Vorrichtung nach Anspruch 1, **dadurch gekennzeichnet, dass** neben dem Durchlauferhitzer (4) weitere elektrische Verbraucher wie z.B. Sensoren, Leuchtmittel und dergleichen in den Standby-Modus einbezogen sind und durch diesen im Energieverbrauch reduzierbar oder abschaltbar sind.

3. Vorrichtung nach Anspruch 1 oder 2, **dadurch gekennzeichnet, dass** sie mehrere Leuchtmittel, insbesondere zum Anzeigen eines Zustandes aufweist, welche durch das Schaltmodul (5) mit Ausnahme eines einzigen Leuchtmittels abschaltbar sind, das der Anzeige des Standby-Modus dient.

4. Vorrichtung nach einem der Ansprüche 1 bis 3, **dadurch gekennzeichnet, dass** der Standby-Modus durch Betätigen eines Bedienungselements der Vorrichtung beendbar ist, wobei entweder ein Bereitschaftsmodus ansteuerbar ist, in dem der Durchlauferhitzer aufgeheizt wird oder ein Brühvorgang sofort startbar ist.

5. Vorrichtung nach einem der Ansprüche 1 bis 4, **dadurch gekennzeichnet, dass** die Leistungsaufnahme im Standby-Modus höchstens 0,5 Watt, vorzugsweise höchstens 0,3 Watt beträgt.

6. Vorrichtung nach einem der Ansprüche 1 bis 5, **dadurch gekennzeichnet, dass** der Durchlauferhitzer (4) mit einer Wärme dämmenden Aussenisolation (20) versehen ist, deren Wärmedurchgangskoeffizient höchstens 2 W/m²K, vorzugsweise höchstens 1 bis 1,5 W/m²K beträgt.

7. Vorrichtung nach einem der Ansprüche 1 bis 6, **dadurch gekennzeichnet, dass** der Durchlauferhitzer (4) eine Flüssigkeitstemperatur von wenigstens 95°C erreicht und dass er derart mit einer Wärme dämmenden Aussenisolation versehen ist, dass die Abkühlung im Standby-Modus nach 2 Stunden nicht mehr als 40°C, vorzugsweise nicht mehr a's 50°C beträgt.

8. Vorrichtung nach einem der Ansprüche 6 oder 7, **dadurch gekennzeichnet, dass** die Aussenisolation (20) aus einem Copolymer aus Propen und Olefinen (Expanded Polypropylen - EPP) besteht.

9. Vorrichtung nach einem der Ansprüche 6 bis 8, **dadurch gekennzeichnet, dass** der Durchlauferhitzer (4) quaderartig ausgebildet ist und einen mäanderartigen Durchlasskanal (29) aufweist.

10. Vorrichtung nach einem der Ansprüche 6 bis 9, **dadurch gekennzeichnet, dass** die Aussenisolation (20) den Durchlauferhitzer (4) weitgehend passgenau umschliesst.

11. Vorrichtung nach Anspruch 9 und Anspruch 10, **dadurch gekennzeichnet, dass** die Aussenisolation (20) durch zwei vorzugsweise passgenau ineinander greifende Halbschalen (34, 34') gebildet wird, welche mit oder ohne zusätzliche Spannmittel zusammengehalten werden.

12. Vorrichtung nach einem der Ansprüche 1 bis 11, **dadurch gekennzeichnet, dass** das Schaltmodul (5) mittels eines Timers derart programmiert ist, dass nach 30 Sekunden bis 120 Sekunden, vorzugsweise nach 60 Sekunden seit der Beendigung eines Brühvorgangs bzw. seit der letzten Betätigung eines Bedienungselements der Standby-Modus einschaltbar ist.

13. Vorrichtung nach einem der Ansprüche 1 bis 12, **dadurch gekennzeichnet, dass** sie eine programmierbare Steuerschaltung aufweist, mit der betriebsrelevante Parameter programmierbar sind, bzw. mit der betriebsrelevante Parameter für Diagnostik-Zwecke speicherbar sind.

14. Vorrichtung nach einem der Ansprüche 6 bis 11, **dadurch gekennzeichnet, dass** der Durchlauferhitzer zur Vermeidung von Wärmebrücken an der Aussenisolation innerhalb der Vorrichtung aufliegt und/oder befestigt ist.

## Claims

1. Apparatus for brewing a liquid comestible or indulgence food,
- having a brewing chamber (1) for holding a portion pack (2) containing a substance to be brewed,
- having an electric pump (3) for routing a liquid through the brewing chamber,
- having an electric continuous-flow heater (4) for heating the liquid,
- and having a main switch (11),
- and having further electrical loads, sensors and control elements,
wherein the apparatus has an electronic switching module (5) and wherein, after a predeterminable time has elapsed since the end of a brewing operation or since the last operation of a control element, it may be switched by the electronic switching module (5) to a standby mode in which, when the main switch (11) is on, at least the continuous-flow heater and preferably the pump are switched off and do not consume electrical power, wherein the brewing chamber (1) is intended to hold a capsule (2), wherein the capsule can be penetrated when the brewing chamber is closed, and wherein an opening element (15) is provided for the purpose of opening and closing the brewing chamber or for the purpose of ejecting the capsule, wherein the operation of the opening element interrupts the standby mode.

2. Apparatus according to Claim 1, **characterized in that** not only the continuous-flow heater (4) but also further electrical loads such as sensors, lighting means and the like are included in the standby mode and can have their power consumption reduced or can be switched off by said standby mode.

3. Apparatus according to Claim 1 or 2, **characterized in that** it has a plurality of lighting means, particularly for indicating a state, which are able to be switched off by the switching module (5) with the exception of a single lighting means which is used for indicating the standby mode.

4. Apparatus according to one of Claims 1 to 3, **characterized in that** the standby mode can be terminated by operating a control element of the apparatus, wherein it is either possible to actuate a ready mode in which the continuous-flow heater is heated or to start a brewing operation immediately.

5. Apparatus according to one of Claims 1 to 4, **characterized in that** the power draw in standby mode is no more than 0.5 watt, preferably no more than 0.3 watt.

6. Apparatus according to one of Claims 1 to 5, **characterized in that** the continuous-flow heater (4) is provided with heat-insulating external insulation (20), the heat transfer coefficient of which is no more than 2 W/m²K, preferably no more than 1 to 1.5 W/m²K.

7. Apparatus according to one of Claims 1 to 6, **characterized in that** the continuous-flow heater (4) reaches a liquid temperature of at least 95°C and **in that** it is provided with heat-insulating external insulation such that the cooling in standby mode after 2 hours is no more than 40°C, preferably no more than 50°C.

8. Apparatus according to one of Claims 6 and 7, **characterized in that** the external insulation (20) comprises a copolymer of propene and olefins (Expanded Polypropylene - EPP).

9. Apparatus according to one of Claims 6 to 8, **characterized in that** the continuous-flow heater (4) is of cuboid design and has a meandrous passage channel (29).

10. Apparatus according to one of Claims 6 to 9, **characterized in that** the external insulation (20) encompasses the continuous-flow heater (4) with a largely precise fit.

11. Apparatus according to Claim 9 and Claim 10, **characterized in that** the external insulation (20) is formed by two half-shells (34, 34') which preferably interlock with a precise fit and which are held together with or without additional clamping means.

12. Apparatus according to one of Claims 1 to 11, **characterized in that** the switching module (5) has been programmed by means of a timer such that after 30 seconds to 120 seconds, preferably after 60 seconds, since the termination of a brewing operation or since the last operation of a control element the standby mode can be switched on.

13. Apparatus according to one of Claims 1 to 12, **characterized in that** it has a programmable control circuit which may be used to program operation-related parameters or which may be used to store operation-related parameters for diagnostic purposes.

14. Apparatus according to one of Claims 6 to 11, **characterized in that** the continuous-flow heater is supported and/or mounted on the external insulation within the apparatus in order to avoid heat bridges.

## Revendications

1. Dispositif d'infusion d'un produit alimentaire ou d'un produit d'agrément liquide
- avec une chambre d'infusion (1) destinée à recevoir un emballage par portion (2) contenant une matière à infuser,
- avec une pompe électrique (3) pour faire circuler un liquide à travers la chambre d'infusion,
- avec un chauffe-eau électrique instantané (4) pour chauffer le liquide,
- et avec un interrupteur principal (11),
- ainsi qu'avec d'autres consommateurs électriques, capteurs et éléments de manoeuvre,
le dispositif comportant un module de commutation électronique (5) et après écoulement d'une période prédéfinissable depuis l'achèvement d'un processus d'infusion ou depuis le dernier actionnement d'un élément de manoeuvre, le dispositif étant susceptible d'être passé à l'aide du module de commutation électronique (5) dans un mode veille, dans lequel, lorsque l'interrupteur principal (11) est en marche, au moins le chauffe-eau instantané et de préférence la pompe sont à l'arrêt et ne consomment pas d'énergie électrique, la chambre d'infusion (1) étant destinée à recevoir une capsule (2), la capsule étant susceptible d'être pénétrée lorsque la chambre d'infusion est fermée et un élément d'ouverture (15) étant disposé pour ouvrir et pour fermer la chambre d'infusion ou pour éjecter la capsule, l'actionnement de l'élément d'ouverture interrompant le mode veille.

2. Dispositif selon la revendication 1, **caractérisé en ce qu'**hormis le chauffe-eau instantané (4), d'autres consommateurs électriques, tels que par exemple des capteurs, des moyens d'éclairage et similaires sont inclus dans le mode veille, ce qui réduit ou coupe leur consommation d'énergie.

3. Dispositif selon la revendication 1 ou 2, **caractérisé en ce qu'**il comporte plusieurs moyens d'éclairage, notamment pour afficher un état, lesquels sont susceptibles d'être mis à l'arrêt par le module de commutation (5), à l'exception d'un seul moyen d'éclairage servant à afficher le mode veille.

4. Dispositif selon l'une quelconque des revendications 1 à 3, **caractérisé en ce que** le mode veille peut être arrêté par actionnement d'un élément de manoeuvre du dispositif, soit un mode d'attente, dans lequel le chauffe-eau instantané chauffe, étant susceptible d'être amorcé, soit un processus d'infusion étant susceptible d'être démarré immédiatement.

5. Dispositif selon l'une quelconque des revendications 1 à 4, **caractérisé en ce qu'**en mode veille, la puissance absorbée est d'au maximum de 0,5 watts, de préférence d'au maximum de 0,3 watts.

6. Dispositif selon l'une quelconque des revendications 1 à 5, **caractérisé en ce que** le chauffe-eau instantané (4) est muni d'une isolation extérieure calorifuge (20) dont le coefficient global de transmission thermique est d'au maximum de 2 W/m²K, de préférence d'au maximum de 1 à 1,5 W/m²K.

7. Dispositif selon l'une quelconque des revendications 1 à 6, **caractérisé en ce que** le chauffe-eau instantané (4) atteint une température du liquide d'au moins 95°C et **en ce qu'**il est muni d'une isolation extérieure calorifuge, de telle sorte que le refroidissement après 2 heures en mode veille ne soit pas supérieur à 40°C, de préférence pas supérieur à 50°C.

8. Dispositif selon la revendication 6 ou 7, **caractérisé en ce que** l'isolation extérieure (20) consiste dans un copolymère de propylène et d'oléfines (Expanded Polypropylen - EPP).

9. Dispositif selon l'une quelconque des revendications 6 à 8, **caractérisé en ce que** le chauffe-eau instantané (4) est conçu sous la forme d'un parallélépipède et comporte un canal de passage (29) en forme de méandres.

10. Dispositif selon l'une quelconque des revendications 6 à 9, **caractérisé en ce que** l'isolation extérieure (20) entoure le chauffe-eau instantané (4) de façon essentiellement ajustée.

11. Dispositif selon la revendication 9 et la revendication 10, **caractérisé en ce qu'**on forme l'isolation extérieure (20) à l'aide de deux demicoques (34, 34') s'engageant l'une dans l'autre de préférence de façon ajustée, dont la cohésion est assurée avec ou sans moyens de serrage supplémentaires.

12. Dispositif selon l'une quelconque des revendications 1 à 11, **caractérisé en ce que** le module de commutation (5) est programmé au moyen d'une horloge à minuterie, de telle sorte que le mode veille soit susceptible d'être mis en marche après de 30 à 120 secondes, de préférence après 60 secondes depuis l'achèvement d'un processus d'infusion ou depuis le dernier actionnement d'un élément de manoeuvre.

13. Dispositif selon l'une quelconque des revendications 1 à 12, **caractérisé en ce qu'**il comporte un circuit de commande programmable, permettant de programmer des paramètres déterminants pour le fonctionnement, voire permettant de mémoriser des paramètres déterminants pour le fonctionnement, à des fins de diagnostic.

14. Dispositif selon l'une quelconque des revendications 6 à 11, **caractérisé en ce que** pour éviter des ponts thermiques sur l'isolation extérieure, le chauffe-eau instantané repose et/ou est fixé sur l'intérieur du dispositif.
